# EUROPÄISCHE PATENTSCHRIFT

(11) **EP 4 146 897 B1**
(45) Veröffentlichungstag und Bekanntmachung des Hinweises auf die Patenterteilung: **10.04.2024**
(21) Anmeldenummer: 21720514.5
(22) Anmeldetag: 26.04.2021
(51) Int. Cl.: E06B 3/663

(54) **ABSTANDHALTER FÜR ISOLIERVERGLASUNGEN**
SPACER FOR INSULATING GLAZING
ENTRETOISE POUR VITRAGES ISOLANTS

(30) Priorität: 06.05.2020 EP 20173128
(43) Veröffentlichungstag der Anmeldung: 15.03.2023
(73) Patentinhaber: Saint-Gobain Glass France, 92400 Courbevoie (FR)
(72) Erfinder: BERGS, Bianca, 52538 Gangelt (DE); MARJAN, Christopher, 52072 Aachen (DE); STAHL-BIDINGER, Markus, 52525 Heinsberg (DE); SCHWERDT, Egbert, 8572 Berg (CH)
(74) Vertreter: SGR Germany-Patents
(86) Internationale Anmeldenummer: PCT/EP2021/060792
(87) Internationale Veröffentlichungsnummer: WO 2021/224042

(56) Entgegenhaltungen:
- EP-A1- 2 930 296
- DE-A1-102016 115 023

## Beschreibung

Die Erfindung betrifft einen Abstandhalter für Isolierverglasungen, eine Isolierverglasung umfassend einen solchen Abstandhalter und ein Verfahren zu dessen Herstellung.

Isolierverglasungen sind vor allem im Zuge immer strengerer Umweltschutzauflagen nicht mehr aus dem Gebäudebau wegzudenken. Diese werden dabei aus mindestens zwei Scheiben gefertigt, die über mindestens einen umlaufenden Abstandshalter miteinander verbunden sind. Je nach Ausführungsform ist der als Verglasungsinnenraum bezeichnete Zwischenraum der beiden Scheiben luft- oder gasgefüllt, in jedem Fall jedoch frei von Feuchtigkeit. Ein zu hoher Gehalt an Feuchtigkeit im Verglasungszwischenraum führt besonders bei kalten Außentemperaturen zur Kondensation von Wassertropfen im Scheibenzwischenraum, was unbedingt zu vermeiden ist. Zur Aufnahme der nach der Montage im System verbleibenden Restfeuchtigkeit können beispielsweise mit einem Trockenmittel gefüllte Hohlkörperabstandshalter verwendet werden.

Neben der Abdichtung des Scheibenzwischenraums gegen Feuchtigkeit besteht eine weitere entscheidende Aufgabe des Abstandhalters in der thermischen Entkopplung von Gebäudeinnenraum auf der einen Seite der Isolierverglasung und Umgebung auf der gegenüberliegenden Seite der Isolierverglasung. Die Wärmeleitfähigkeit der Abstandhalter hat dabei einen nicht zu vernachlässigenden Einfluss auf die thermischen Eigenschaften der Scheibe. Abstandhalter bestehen in einer der bekannten Ausführungsformen aus einem Leichtmetall, üblicherweise Aluminium. Diese lassen sich leicht verarbeiten, jedoch wird die isolierende Wirkung der Verglasung im Randbereich aufgrund der guten Wärmeleitfähigkeit des Aluminiums deutlich herabgesetzt (auch als *cold edge*-Effekt bezeichnet).

Um die thermischen Eigenschaften zu verbessern, sind sogenannte *warm* edge-Lösungen für Abstandhalter bekannt. Diese Abstandhalter bestehen insbesondere aus Kunststoff und weisen folglich eine deutlich verringerte Wärmeleitfähigkeit auf. Im Vergleich zu Abstandhaltern aus Metall mangelt es den Kunststoffabstandhaltern an einer ausreichenden Gasdichtigkeit, die wiederum durch auf die Außenfläche der Abstandhalter aufgebrachte Isolationsfolien erreicht werden kann.

WO 2013/104507 A1 offenbar einen Abstandhalter mit einem polymeren Hohlprofilgrundkörper und einer Isolationsfolie. Die Isolationsfolie enthält dabei eine polymere Folie und mindestens zwei metallische oder keramische Schichten, die alternierend mit mindestens einer polymeren Schicht angeordnet sind.

Um auch die Wärmeleitfähigkeit polymerer Abstandhalter noch weiter zu senken bestehen Bestrebungen Abstandhalter nicht nur als Hohlprofil auszuführen, sondern darüber hinaus auch den Luftanteil innerhalb des Materials zu erhöhen. So ist in DE 19807454 A1 ein geschäumter Kunststoffabstandhalter beschrieben. Solche geschäumten polymeren Abstandhalter können beispielsweise durch den Zusatz von Schäumungsmitteln erzeugt werden, wie in EP 2930296 A1 gezeigt.

DE 102016115023 A1 beschreibt einen Abstandhalter für Isolierverglasungen, dessen Wandung zumindest in Teilbereichen porös ist. Das Kunststoffmaterial des Profilkörpers basiert auf einer Vielzahl möglicher Polyolefine und kann optional Verstärkungsfasern enthalten.

Ein weiterer geschäumter Abstandhalter ist in EP 2930296 A1 offenbart. Der Abstandhalter kann diverse thermoplastische Polymere umfassen, wobei Polypropylen bevorzugt wird.

Das Aufschäumen des Abstandhaltergrundkörpers hat jedoch, abhängig von der Richtung der auf den Abstandhalter wirkenden Kraft, einen negativen Einfluss auf die mechanischen Eigenschaften des Abstandhalters. Geschäumte Abstandhalter weisen zwar häufig eine gute mechanische Festigkeit, jedoch eine mangelnde Elastizität auf.

Aufgabe der vorliegenden Erfindung ist es, einen Abstandhalter, der eine geringe Wärmeleitfähigkeit bei gleichzeitig hoher Elastizität aufweist, eine Isolierverglasung mit diesem Abstandhalter, sowie ein Verfahren zur Herstellung des Abstandhalters bereitzustellen.

Die Aufgabe der vorliegenden Erfindung wird erfindungsgemäß durch einen Abstandhalter, eine Isolierverglasung mit Abstandhalter und ein Verfahren zur Herstellung des Abstandhalters nach den unabhängigen Ansprüchen 1, 11 und 12 gelöst. Bevorzugte Ausführungen der Erfindung gehen aus den Unteransprüchen hervor.

Der erfindungsgemäße Abstandhalter für Isolierverglasungen umfasst mindestens einen polymeren Grundkörper umfassend zwei Scheibenkontaktflächen, eine Verglasungsinnenraumfläche, eine Außenfläche und eine Hohlkammer. Der polymere Grundkörper ist ein geschäumter Grundkörper, der eine Porenstruktur aufweist. Eine Porenstruktur ist eine Struktur mit regelmäßigen Hohlräumen, die mit Luft gefüllt sind. Der polymere Grundkörper ist aus einem thermoplastischen Polymer als Grundmaterial gefertigt, dem ein Verstärkungsmittel zugesetzt und ein elastomerer Zusatz beigemischt sind. Der Anteil des thermoplastischen Polymers als Grundmaterial des polymeren Grundkörpers beträgt zwischen 30,0 Gew.-% bis 70,0 Gew.-% und der Anteil des Verstärkungsmittels beträgt 20,0 Gew.-% bis 45,0 Gew.-%. Das thermoplastische Polymer als Grundmaterial umfasst ein styrolbasiertes Polymer. Des Weiteren umfasst der polymere Grundkörper einen elastomeren Zusatz, der einer Verbesserung der elastischen Eigenschaften des Abstandhalters bewirkt. Als elastomerer Zusatz wird ein thermoplastisches Elastomer und/oder ein thermoplastisches Terpolymer mit elastomerer Komponente zugesetzt. Der elastomere Zusatz hat dabei einen Anteil von insgesamt 0,5 Gew.-% bis 20,0 Gew.-% an der Gesamtmasse des Grundkörpers. Innerhalb dieser Größenordnung kann eine wesentliche Verbesserung der elastischen Eigenschaften des Grundkörpers beobachtet werden. Dadurch werden die mechanischen Eigenschaften des Abstandhalters verbessert.

Die in Gewichtsprozent gegebenen Anteile der einzelnen Komponenten des Gemisches des polymeren Grundkörpers addieren sich zu 100 %, wobei auch andere als die soeben genannten Komponenten anwesend sein können. Beispiele für solche weiteren Komponenten sind chemische Schäumungsmittel und Farbpigmente.

Die zwei Scheibenkontaktflächen des Abstandhalters werden als erste Scheibenkontaktfläche und zweite Scheibenkontaktfläche bezeichnet. Die erste Scheibenkontaktfläche und die zweite Scheibenkontaktfläche stellen die Seiten des Abstandhalters dar, an denen beim Einbau des Abstandhalters die Montage der äußeren Scheiben (erste Scheibe und zweite Scheibe) einer Isolierverglasung erfolgt. Die erste Scheibenkontaktfläche und die zweite Scheibenkontaktfläche verlaufen parallel zueinander.

Die Verglasungsinnenraumfläche ist als die Fläche des Abstandhaltergrundkörpers definiert, die nach Einbau des Abstandhalters in einer Isolierverglasung in Richtung des Innenraums der Verglasung weist. Die Verglasungsinnenraumfläche liegt dabei zwischen der ersten und der zweiten Scheibe.

Die Außenfläche des Abstandhaltergrundkörpers ist die der Verglasungsinnenraumfläche gegenüberliegende Seite, die vom Innenraum der Isolierverglasung weg in Richtung einer äußeren Versiegelung weist.

Die Außenfläche des Abstandhalters kann in einer möglichen Ausführungsform jeweils benachbart zu den Scheibenkontaktflächen abgewinkelt sein, wodurch eine erhöhte Stabilität des Grundkörpers erzielt wird. Die Außenfläche kann benachbart zu den Scheibenkontaktflächen beispielsweise um jeweils 30-60°, relativ zur Außenfläche, abgewinkelt sein.

Die Hohlkammer des Grundkörpers grenzt an die Verglasungsinnenraumfläche, wobei die Verglasungsinnenraumfläche sich oberhalb der Hohlkammer befindet und die Außenfläche des Abstandhalters sich unterhalb der Hohlkammer befindet. Oberhalb ist in diesem Zusammenhang als im Einbauzustand des Abstandhalters in einer Isolierverglasung dem inneren Scheibenzwischenraum der Isolierverglasung zugewandt und unterhalb als dem Scheibeninnenraum abgewandt definiert.

Die Hohlkammer des Abstandhalters führt zu einer Gewichtsreduktion im Vergleich zu einem massiv ausgeformten Abstandhalter und steht zur Aufnahme von weiteren Komponenten, wie beispielsweise eines Trockenmittels, zur Verfügung.

Bevorzugt sind dem Grundkörper ein thermoplastisches Elastomer oder ein thermoplastisches Terpolymer mit elastomerer Komponente als elastomerer Zusatz beigemischt. Thermoplastische Elastomere als elastomerer Zusatz werden bevorzugt in einem Anteil von 0,3 Gew.-% bis 5,0 Gew.-%, bevorzugt 0,3 Gew.-% bis 4,0 Gew.-% zugesetzt, während thermoplastische Terpolymere mit elastomerer Komponente in einem Anteil von 3,0 Gew.-% bis 20,0 Gew.-%, bevorzugt 4,0 Gew.-% bis 14,0 Gew.-% eingesetzt werden.

In einer bevorzugten Ausführungsform des erfindungsgemäßen Abstandhalters wird als elastomerer Zusatz ein thermoplastisches Elastomer aus der Gruppe der thermoplastischen Polyurethane (TPU) und/oder der Gruppe der thermoplastischen Styrolblockcopolymere (TPS) eingesetzt. Bei den thermoplastischen Elastomeren TPU und TPS genügt bereits ein Anteil von 0,3 Gew.-% bis 5,0 Gew.-% um die gewünschte Verbesserung der elastischen Eigenschaften zu bewirken. Besonders bevorzugt werden 0,5 Gew.-% bis 4,0 Gew.-%, insbesondere 1,5 Gew.-% bis 2,5 Gew.-% TPU und/der TPS zugesetzt. Diese geringen Mengen genügen bereits um eine hinreichende Elastizität zu erreichen, wobei in den bevorzugten Bereichen ein besseres optisches Erscheinungsbild der Oberfläche sowie eine bessere Stabilität der Polymerschmelze während der Herstellung des Grundkörpers erreicht wird.

In einer anderen bevorzugten Ausführungsform des erfindungsgemäßen Abstandhalters ist der elastomere Zusatz ein thermoplastisches Terpolymer mit elastomerer Komponente. Das thermoplastische Terpolymer stellt ein Copolymer aus mehreren Monomerkomponenten dar, wobei zumindest eine Monomerkomponente die elastischen Eigenschaften des elastomeren Zusatzes bewirkt. Die anderen Monomerkomponenten können beispielsweise so gewählt werden, dass eine gute Kompatibilität zum Grundmaterial des Abstandhalters gewährleistet ist.

Die thermoplastischen Terpolymere mit elastomerer Komponente werden bevorzugt in einem Anteil von 3,0 Gew.-% bis 20,0 Gew.-%, bevorzugt 4,0 Gew.-% bis 20,0 Gew.-%, besonders bevorzugt 4,0 Gew.-% bis 14,0 Gew.-%, zugesetzt. Diese Bereiche haben sich als besonders vorteilhaft hinsichtlich der resultierenden Elastizität des Grundkörpers erwiesen. Insbesondere ABS und/oder ASA als elastomere Zusätze sind diesbezüglich vorteilhaft.

Das thermoplastische Terpolymer ist bevorzugt als Acrylnitril-Butadien-Styrol-Copolymer (ABS) realisiert, dessen elastomere Komponente im Butadienanteil des Copolymers besteht. Als elastomerer Zusatz zum Grundkörper bewirkt ABS eine höhere Schlagzähigkeit und Elastizität des Materials.

ABS hat sich hinsichtlich der mechanischen Eigenschaften und der Elastizität als besonders wirkungsvoll erwiesen bei Verwendung von 4,0 Gew.-% bis 20,0 Gew.-%, besonders bevorzugt 4,5 Gew.-% bis 13,0 Gew.-%, insbesondere 6,0 Gew.-% bis 12,0 Gew.-% ABS im Grundkörper.

Eine weitere bevorzugte Ausführungsform der Erfindung umfasst einen Abstandhalter mit einem thermoplastischen Terpolymer mit elastomerer Komponente, wobei Acrylnitril-Styrol-Acrylat (ASA) als thermoplastisches Terpolymer verwendet wird. Als Acrylnitril-Styrol-Acrylat wird ein mit Acrylatkautschuk modifiziertes Styrol-Acrylnitril-Copolymer bezeichnet, wobei die elastomere Komponente im Sinne der Erfindung Acrylatkautschuk ist. Die Eigenschaften des ASA sind grundsätzlich denen des ABS ähnlich, wobei sich ähnliche Anteile als besonders vorteilhaft erwiesen haben. ASA wird dabei bevorzugt in einem Anteil von 4,0 Gew.-% bis 20 Gew.-%, besonders bevorzugt 4,5 Gew.-% bis 13,0 Gew.-%, insbesondere 6,0 Gew.-% bis 12,0 Gew.-% zugesetzt.

Das thermoplastische Polymer des Grundmaterials umfasst erfindungsgemäß ein styrolbasiertes Polymer. Styrolbasierte Polymere haben sich als besonders vorteilhaft hinsichtlich der mechanischen Eigenschaften des Grundkörpers erwiesen. Ein insbesondere geeignetes thermoplastisches Polymer ist Styrol-Acrylnitril (SAN). Alternativ wäre jedoch denkbar als Grundmaterial des Grundkörpers Polyethylen (PE), Polyethylenterephthalat (PET), Polypropylen (PP), oder Copolymere oder Gemische davon zu wählen.

In einer besonders bevorzugten Ausführungsform des Abstandhalters wird für das Grundmaterial ein styrolbasiertes thermoplastisches Polymer gewählt, wobei der elastomere Zusatz zumindest kein Polypropylen, bevorzugt keine thermoplastischen Elastomere auf Olefinbasis (TPO) enthält. Es sich gezeigt, dass Gemische styrolbasierter thermoplastischer Polymere mit Polypropylen als elastomerem Zusatz Stabilitätsprobleme der Schmelze im Extrusionsprozess aufweisen können. Damit wird der Produktionsprozess in dem Sinne erschwert, dass eine exakte Prozessführung und Überwachung notwendig ist. Entsprechend wird der Produktionsprozess durch einen Verzicht auf elastomere Zusätze mit Polypropylen vereinfacht. Ähnliche Effekte sind bei anderen thermoplastischen Elastomeren auf Olefinbasis zu erwarten, so dass diese Gruppe bei Auswahl des elastomeren Zusatzes bevorzugt gemieden wird.

Zum Aufschäumen von Kunststoffschmelzen, wie der Polymerschmelze zur Extrusion des polymeren Grundkörpers, sind verschiedene Verfahren bekannt, die sich in physikalische, mechanische und chemische Verfahren untergliedern lassen. Bei physikalischen und mechanischen Verfahren wird ein Gas allein mittels physikalischer oder mechanischer Methoden in die Polymerschmelze eingearbeitet. Chemische Schäumverfahren basieren hingegen auf der Zersetzung eines Treibmittels durch Wärmezufuhr, wodurch ein flüchtiger gasförmiger Bestandteil des Treibmittels abgespalten wird. Der in der Schmelze entstehende feinverteilte gasförmige Bestandteil bewirkt das Aufschäumen der Polymerschmelze. Zur Herstellung des erfindungsgemäßen Abstandhalters werden bevorzugt Direktschäumverfahren verwendet. Zu den Direktschäumverfahren gehört die zur Herstellung des erfindungsgemäßen Abstandhalters bevorzugt verwendete Schaumextrusion, bei der das vom Treibmittel freigesetzte Gas eine Expansion des Kunststoffs beim Austreten aus einer Lochdüse verursacht. Durch Schäumen während der Extrusion sind die Wände des Hohlprofils nicht mehr als Vollmaterial ausgebildet, sondern sind durchsetzt von Gasblasen, daher porenförmigen Hohlräumen. Die geschäumte Ausführung des Grundkörpers ist vorteilhaft hinsichtlich der thermischen Eigenschaften des Grundkörpers und bewirkt gleichzeitig eine Gewichtsreduktion. Bezüglich der Gewichtsreduktion werden dabei im Vergleich zu einem als Vollmaterial ausgeführten Grundkörper ungefähr 10 % bis 20 % des Gewichts eingespart. Die thermischen Eigenschaften werden durch die in den Hohlräumen eingeschlossenen Gase stark verbessert, wobei die in den Poren ruhenden Gase als thermischer Isolator wirken.

Bevorzugt ist der erfindungsgemäße Abstandhalter durch chemisches Schäumen unter Zusatz eines Schäumungsmittels aufgeschäumt. Das Schäumungsmittel wird bevorzugt in Form eines Granulats umfassend ein Trägermaterial und ein Treibmittel eingesetzt. Das Treibmittel zersetzt sich bei Wärmezufuhr in einer endothermen Reaktion unter Abspaltung eines gasförmigen Stoffes, bevorzugt CO₂. Schäumungsmittel zum chemischen Schäumen von Kunststoffen sind dem Fachmann bekannt und kommerziell erhältlich. Das Trägermaterial ist in der Regel ein Polymergranulat, beispielsweise basierend auf Polypropylen, Ethylenvinylacetat (EVA), Ethylen-Butylacrylat-Copolymer (EBA), Polyethylen (PE), thermoplastischem Polystyrol (TPS) oder thermoplastischen Polyurethanen (TPU). Bevorzugt wird ein Schäumungsmittel eingesetzt, das kein Polypropylen, besonders bevorzugt keine thermoplastischen Elastomere auf Olefinbasis (TPO), enthält. Das granulatförmige Schäumungsmittel wird dem Polymergemisch in der Regel vor dem Aufschmelzen im Extruder zugegeben.

Das Schäumungsmittel ist bevorzugt in einer Menge von 0,5 Gew.-% bis 3,0 Gew.-%, besonders bevorzugt 0,5 Gew.-% bis 2,0 Gew.-%, insbesondere 0,8 Gew.-% bis 1,2 Gew.-% zum Polymergemisch des polymeren Grundkörpers zugesetzt. Diese geringen Mengen sind ausreichend um die gewünschte Porosität des Grundkörpers zu erhalten.

Der polymere Grundkörper umfasst bevorzugt geschlossenzellige Poren. Die Porengröße beträgt bevorzugt 10 µm bis 100 µm, besonders bevorzugt von 20 µm bis 80 µm, insbesondere von 30 µm bis 70 µm. Innerhalb dieser Porengrößen ist sowohl eine vorteilhafte Reduzierung der Wärmeleitfähigkeit als auch eine gute mechanische Stabilität des Grundkörpers zu erreichen.

Als Verstärkungsmittel in polymeren Grundkörpern sind dem Fachmann die verschiedensten faser-, pulver-, oder plättchenförmigen Verstärkungsmittel bekannt. Zu den pulver- und/oder plättchenförmigen Verstärkungsmitteln gehören beispielsweise Glimmer und Talkum. Besonders bevorzugt hinsichtlich mechanischer Eigenschaften sind Verstärkungsfasern, zu denen Glasfasern, Aramidfasern, Keramikfasern oder Naturfasern zuzurechnen sind. Alternativen dazu sind auch gemahlene Glasfasern oder Glashohlkugeln möglich. Diese Glashohlkugeln haben einen Durchmesser von 10 µm bis 20 µm und verbessern die Stabilität des polymeren Hohlprofils. Geeignete Glashohlkugeln sind unter dem Namen "3M^{™} Glass Bubbles" käuflich erhältlich. In einer möglichen Ausführungsform enthält der polymere Grundkörper sowohl Glasfasern als auch Glashohlkugeln. Eine Beimischung von Glashohlkugeln führt zu einer weiteren Verbesserung der thermischen Eigenschaften des Hohlprofils.

Besonders bevorzugt werden Glasfasern als Verstärkungsmittel eingesetzt, wobei diese in einem Anteil von 25 Gew.-% (Gewichtsprozent) bis 40 Gew.-%, insbesondere in einem Anteil von 30 Gew.-% bis 35 Gew.-% zugesetzt sind. Innerhalb dieser Bereiche ist eine gute mechanische Stabilität und Festigkeit des Grundkörpers zu beobachten. Ferner ein Glasfasergehalt von 30 Gew.-% bis 35 Gew.-% gut kompatibel mit der in einer bevorzugten Ausführungsform auf der Außenfläche des Abstandhalters aufgebrachten mehrschichtigen Barrierefolie aus alternierenden polymeren Schichten und metallischen Schichten. Durch Anpassung des Wärmeausdehnungskoeffizienten des polymeren Grundkörpers und der Barrierefolie oder -beschichtung lassen sich temperaturbedingte Spannungen zwischen den unterschiedlichen Materialien und ein Abplatzen der Barrierefolie oder -beschichtung vermeiden.

Der Grundkörper umfasst bevorzugt eine gas- und dampfdichte Barrierefolie, die der Verbesserung der Gasdichtigkeit des Grundkörpers dient. Bevorzugt ist diese mindestens auf der Außenfläche des polymeren Grundkörpers, bevorzugt auf der Außenfläche und auf einem Teil der Scheibenkontaktflächen, aufgebracht. Die gas- und dampfdichte Barriere verbessert die Dichtigkeit des Abstandhalters gegen Gasverlust und Eindringen von Feuchtigkeit. Bevorzugt ist die Barriere auf etwa der Hälfte bis zwei Drittel der Scheibenkontaktflächen aufgebracht. Eine geeignete Barrierefolie ist beispielsweise in WO 2013/104507 A1 offenbart.

In einer bevorzugten Ausführungsform ist die gas- und dampfdichte Barriere auf der Außenfläche eines polymeren Abstandhalters als Folie ausgeführt. Diese Barrierefolie enthält mindestens eine polymere Schicht sowie eine metallische Schicht oder eine keramische Schicht. Dabei beträgt die Schichtdicke der polymeren Schicht zwischen 5 µm und 80 µm, während metallische Schichten und/oder keramische Schichten mit einer Dicke von 10 nm bis 200 nm eingesetzt werden. Innerhalb der genannten Schichtdicken wird eine besonders gute Dichtigkeit der Barrierefolie erreicht. Die Barrierefolie kann auf dem polymeren Grundkörper aufgebracht werden, beispielsweise geklebt werden. Alternativ kann die Folie mit dem Grundkörper zusammen co-extrudiert werden.

Besonders bevorzugt enthält die Barrierefolie mindestens zwei metallische Schichten und/oder keramische Schichten, die alternierend mit mindestens einer polymeren Schicht angeordnet sind. Die Schichtdicken der einzelnen Schichten sind bevorzugt wie im vorhergehenden Absatz beschrieben. Bevorzugt werden die außenliegenden Schichten dabei von einer metallischen Schicht gebildet. Die alternierenden Schichten der Barrierefolie können auf die verschiedensten nach dem Stand der Technik bekannten Methoden verbunden bzw. aufeinander aufgetragen werden. Methoden zur Abscheidung metallischer oder keramischer Schichten sind dem Fachmann hinlänglich bekannt. Die Verwendung einer Barrierefolie mit alternierender Schichtenabfolge ist besonders vorteilhaft im Hinblick auf die Dichtigkeit des Systems. Ein Fehler in einer der Schichten führt dabei nicht zu einem Funktionsverlust der Barrierefolie. Im Vergleich dazu kann bei einer Einzelschicht bereits ein kleiner Defekt zu einem vollständigen Versagen führen. Des Weiteren ist die Auftragung mehrerer dünner Schichten im Vergleich zu einer dicken Schicht vorteilhaft, da mit steigender Schichtdicke die Gefahr interner Haftungsprobleme ansteigt. Ferner verfügen dickere Schichten über eine höhere Leitfähigkeit, so dass eine derartige Folie thermodynamisch weniger geeignet ist.

Die polymere Schicht der Folie umfasst bevorzugt Polyethylenterephthalat, Ethylenvinylalkohol, Polyvinylidenchlorid, Polyamide, Polyethylen, Polypropylen, Silikone, Acrylonitrile, Polyacrylate, Polymethylacrylate und/oder Copolymere oder Gemische davon. Die metallische Schicht enthält bevorzugt Eisen, Aluminium, Silber, Kupfer, Gold, Chrom und/oder Legierungen oder Oxide davon. Die keramische Schicht der Folie enthält bevorzugt Siliziumoxide und/oder Siliziumnitride.

In einer alternativen bevorzugten Ausführungsform ist die gas- und dampfdichte Barriere bevorzugt als Beschichtung ausgeführt. Die Beschichtung enthält Aluminium, Aluminiumoxide und / oder Siliziumoxide und wird bevorzugt über ein PVD-Verfahren (physikalische Gasphasenabscheidung) aufgebracht. Die Beschichtung mit den genannten Materialien liefert besonders gute Ergebnisse im Hinblick auf Dichtigkeit und zeigt zusätzlich exzellente Haftungseigenschaften zu den in Isolierverglasungen verwendeten Materialien der äußeren Versiegelung.

In einer besonders bevorzugten Ausführungsform weist die gas- und dampfdichte Barriere mindestens eine metallische Schicht oder keramische Schicht auf, die als Beschichtung ausgeführt ist und Aluminium, Aluminiumoxide und / oder Siliziumoxide enthält und bevorzugt über ein PVD-Verfahren (physikalische Gasphasenabscheidung) aufgebracht ist.

Bevorzugt weist die Verglasungsinnenraumfläche des Abstandhalters mindestens eine Öffnung auf. Bevorzugt sind mehrere Öffnungen in der Verglasungsinnenraumfläche angebracht. Die Gesamtzahl der Öffnungen hängt dabei von der Größe der Isolierverglasung ab. Die Öffnungen verbinden die Hohlkammer mit dem inneren Scheibenzwischenraum, wodurch ein Gasaustausch zwischen diesen möglich wird. Dadurch wird eine Aufnahme von Luftfeuchtigkeit durch ein in der Hohlkammer befindliches Trockenmittel erlaubt und somit ein Beschlagen der Scheiben verhindert. Die Öffnungen sind bevorzugt als Schlitze ausgeführt, besonders bevorzugt als Schlitze mit einer Breite von 0,2 mm und einer Länge von 2 mm. Die Schlitze gewährleisten einen optimalen Luftaustausch ohne dass Trockenmittel aus der Hohlkammer in den inneren Scheibenzwischenraum eindringen kann.

Der Abstandhalter weist bevorzugt entlang der Scheibenkontaktflächen eine Höhe von 5 mm bis 15 mm, besonders bevorzugt von 5 mm bis 10 mm, auf.

Die Breite der Verglasungsinnenraumfläche, beziehungsweise die Breite der Teilbereiche der Verglasungsinnenraumfläche, die den Abstand zweier benachbarter Scheiben der Isolierverglasung definiert, beträgt 4 mm bis 30 mm, bevorzugt 8 mm bis 16 mm.

Der beschriebene Abstandhalter umfassend eine erste Scheibenkontaktfläche und eine zweite Scheibenkontaktfläche ist sowohl für Doppel- als auch für Dreifach- und Mehrfachverglasungen geeignet. Dabei können zur Aufnahme mehrerer Scheiben sowohl weitere Abstandhalter eingesetzt werden, als auch ein in seiner Formgebung zur Aufnahme mehrerer Scheiben geeigneter Abstandhaltergrundkörper. In ersterem Fall werden zunächst eine erste und eine zweite Scheibe an den Scheibenkontaktflächen des Abstandhalters angebracht und daraufhin an einer der vom Abstandhalter wegweisenden Oberflächen der Scheiben weitere Abstandhalter angebracht, deren freiliegende Scheibenkontaktflächen weitere Scheiben aufnehmen. In der dazu alternativen Ausführungsform kann eine Dreifach- oder Mehrfachisolierverglasung auch mit einem Abstandhalter in Form eines Doppelabstandhalters ausgeführt sein. Ein solcher Doppelabstandhalter kann mindestens eine zusätzliche Scheibe in einer Nut aufnehmen. So weist ein Abstandhalter für Dreifachverglasungen eine Nut in der Verglasungsinnenraumfläche zwischen erster Scheibenkontaktfläche und zweiter Scheibenkontaktfläche auf, in der eine dritte Scheibe zwischen der ersten Scheibe und der zweiten Scheibe eingesetzt wird. Die erste und die zweite Scheibe werden an der ersten und zweiten Scheibenkontaktfläche des Abstandhalters angebracht. Da die Nut zwischen der ersten Verglasungsinnenraumfläche und zweiten Verglasungsinnenraumfläche verläuft, begrenzt sie diese seitlich und trennt eine erste Hohlkammer und eine zweite Hohlkammer voneinander. Die Seitenflanken der Nut werden dabei von den Wänden der ersten Hohlkammer und der zweiten Hohlkammer gebildet. Derartige Abstandhaltergrundformen sind unter anderem aus WO 2014/198431 A1 bekannt.

Die Erfindung umfasst des Weiteren eine Isolierverglasung mit erfindungsgemäßem Abstandhalter. Die Isolierverglasung enthält mindestens eine erste Scheibe, eine zweite Scheibe und einen die Scheiben umfassenden umlaufenden erfindungsgemäßen Abstandhalter.

An die Verglasungsinnenraumfläche des Abstandhalters angrenzend befindet sich der Verglasungsinnenraum der Isolierverglasung. Die Außenfläche des Abstandhalters grenzt hingegen an den äußeren Scheibenzwischenraum. Die erste Scheibe ist dabei an der ersten Scheibenkontaktfläche des Abstandhalters und die zweite Scheibe an der zweiten Scheibenkontaktfläche des Abstandhalters angebracht.

Die erste und die zweite Scheibe sind an den Scheibenkontaktflächen bevorzugt über ein Dichtmittel angebracht, das zwischen der ersten Scheibenkontaktfläche und der ersten Scheibe und/oder der zweiten Scheibenkontaktfläche und der zweiten Scheibe angebracht ist.

Das Dichtmittel enthält bevorzugt Butylkautschuk, Polyisobutylen, Polyethylenvinylalkohol, Ethylenvinylacetat, Polyolefin-Kautschuk, Polypropylen, Polyethylen, Copolymere und/oder Gemische davon.

Das Dichtmittel ist bevorzugt in mit einer Dicke von 0,1 mm bis 0,8 mm, besonders bevorzugt 0,2 mm bis 0,4 mm in den Spalt zwischen Abstandhalter und Scheiben eingebracht.

Der äußere Scheibenzwischenraum der Isolierverglasung ist bevorzugt mit einer äußeren Abdichtung verfüllt. Diese äußere Abdichtung dient vor allem der Verklebung der beiden Scheiben und somit der mechanischen Stabilität der Isolierverglasung.

Die äußere Abdichtung enthält bevorzugt Polysulfide, Silikone, Silikonkautschuk, Polyurethane, Polyacrylate, Copolymere und/oder Gemische davon. Derartige Stoffe haben eine sehr gute Haftung auf Glas, so dass die äußere Abdichtung eine sichere Verklebung der Scheiben gewährleistet. Die Dicke der äußeren Abdichtung beträgt bevorzugt 2 mm bis 30 mm, besonders bevorzugt 5 mm bis 10 mm.

In einer besonders bevorzugten Ausführungsform der Erfindung umfasst die Isolierverglasung mindestens drei Scheiben, wobei an die erste Scheibe und/oder die zweite Scheibe ein weiterer Abstandhalterrahmen angebracht ist, an dem die mindestens dritte Scheibe befestigt ist. In einer alternativen Ausführungsform umfasst die Isolierverglasung einen Doppelabstandhalter mit Nut, in dessen Nut die dritte Scheibe eingesetzt ist. Die erste und die zweite Scheibe liegen an den Scheibenkontaktflächen an.

Die erste Scheibe, die zweite Scheibe und/oder die dritte Scheibe der Isolierverglasung enthalten bevorzugt Glas, besonders bevorzugt Quarzglas, Borosilikatglas, Kalk-Natron-Glas und/oder Gemische davon. Die erste und/oder zweite Scheibe der Isolierverglasung können auch thermoplastische polymere Scheiben umfassen. Thermoplastische polymere Scheiben umfassen bevorzugt Polycarbonat, Polymethylmethacrylat und/oder Copolymere und/oder Gemische davon. Darüberhinausgehende Scheiben der Isolierverglasung können die gleiche Zusammensetzung haben wie für die erste, zweite und dritte Scheibe erwähnt.

Die erste Scheibe und die zweite Scheibe verfügen über eine Dicke von 2 mm bis 50 mm, bevorzugt 2 mm bis 10 mm, besonders bevorzugt 4 mm bis 6 mm, wobei beide Scheiben auch unterschiedliche Dicken haben können.

Die erste Scheibe, die zweite Scheibe und weitere Scheiben können aus Einscheibensicherheitsglas, aus thermisch oder chemisch vorgespanntem Glas, aus Floatglas, aus extraklarem eisenarmem Floatglas, gefärbtem Glas, oder aus Verbundsicherheitsglas enthaltend eine oder mehrere dieser Komponenten ausgeführt sein. Die Scheiben können beliebige weitere Komponenten oder Beschichtungen, beispielsweise Low-E-Schichten oder anderweitige Sonnenschutzbeschichtungen, aufweisen.

Der äußere Scheibenzwischenraum, begrenzt durch erste Scheibe, zweite Scheibe und Außenfläche des Abstandhalters, ist zumindest teilweise, bevorzugt vollständig, mit einer äußeren Versiegelung verfüllt. Dadurch wird eine sehr gute mechanische Stabilisierung des Randverbunds erzielt. Ferner umgibt die Versiegelung den Druckausgleichskörper und schützt diesen auf diese Weise gegenüber mechanischer Einwirkung von außen.

Bevorzugt enthält die äußere Versiegelung Polymere oder silanmodifizierte Polymere, besonders bevorzugt organische Polysulfide, Silikone, raumtemperaturvernetzenden (RTV) Silikonkautschuk, peroxidischvernetzten Silikonkautschuk und/oder additions-vernetzten Silikonkautschuk, Polyurethane und/oder Butylkautschuk.

Das Dichtmittel zwischen der ersten Scheibenkontaktfläche und der ersten Scheibe, beziehungsweise zwischen der zweiten Scheibenkontaktfläche und der zweiten Scheibe, enthält bevorzugt ein Polyisobutylen. Das Polyisobutylen kann ein vernetzendes oder nicht vernetzendes Polyisobutylen sein.

Die Isolierverglasung ist optional mit einem Schutzgas, bevorzugt mit einem Edelgas, vorzugsweise Argon oder Krypton befüllt, die den Wärmeübergangswert im Isolierverglasungszwischenraum reduzieren.

Grundsätzlich sind verschiedenste Geometrien der Isolierverglasung möglich, beispielsweise rechteckige, trapezförmige und abgerundete Formen. Zur Herstellung runder Geometrien kann der Abstandhalter beispielsweise im erwärmten Zustand gebogen werden.

An den Ecken der Isolierverglasung sind die Abstandhalter beispielsweise über Eckverbinder miteinander verknüpft. Derartige Eckverbinder können beispielsweise als Kunststoffformteil mit Dichtung ausgeführt sein, in dem zwei Abstandhalter zusammenstoßen.

In einer weiteren bevorzugten Ausführungsform wird der Abstandhalter an den Ecken der Verglasung nicht zertrennt und im erforderlichen Winkel über Eckverbinder verbunden, sondern wird unter Erwärmung in die entsprechende Eckgeometrie gebogen.

Die Erfindung umfasst ferner ein Verfahren zur Herstellung eines erfindungsgemäßen Abstandhalters umfassend die Schritte:
a) Bereitstellen eines Gemisches aus zumindest thermoplastischem Polymer als Grundmaterial, elastomerem Zusatz, Verstärkungsmittel und Schäumungsmittel,
b) Schmelzen des Gemisches in einem Extruder bei einer Temperatur von 200 °C bis 240 °C,
c) Zersetzung des Schäumungsmittels unter Temperatureinwirkung,
d) Austritt der Schmelze aus dem Extruder durch ein Formwerkzeug und Formen eines Abstandhaltergrundkörpers,
e) Stabilisieren des Abstandhalters und
f) Abkühlen des Abstandhalters,
wobei das thermoplastische Polymer als Grundmaterial in Schritt a) ein styrolbasiertes Polymer umfasst.

Die polymeren Komponenten des Gemisches in Schritt a), also thermoplastisches Polymer und elastomerer Zusatz, werden bevorzugt in Form von Granulaten bereitgestellt. Dadurch sind diese gut dosierbar und einfach zu handhaben. Das Verstärkungsmittel liegt in Faser- oder Kugelform vor, ist also ebenfalls einfach dosierbar. Das Verstärkungsmittel kann auch bereits mit dem thermoplastischen Polymer gemeinsam bereitgestellt werden. Solche Mischungen aus thermoplastischem Polymer mit darin enthaltenem definierten Anteil an Verstärkungsmittel sind kommerziell erhältlich. Geeignete Schäumungsmittel können in Form eines Granulats umfassend ein Trägermaterial und ein Treibmittel kommerziell erworben werden. Das Treibmittel ist auf der Oberfläche des granulatförmigen Trägermaterials aufgebracht. Die Konzentration des Treibmittels auf dem Trägermaterial kann variieren und beträgt häufig zwischen 15 Gew.-% bis 30 Gew.-%, beispielsweise 20 Gew.-% oder 25 Gew.-%.

Bevorzugt umfasst das in Schritt a) bereitgestellte Gemisch Farbpigmente und/oder Additive, besonders bevorzugt zumindest Farbpigmente. Die Farbpigmente werden dabei in Form eines polymergebundenen Farbpigments bereitgestellt, in dem das Farbpigment mit dem verwendeten thermoplastischen Grundmaterial des Abstandhalters in Form eines Granulats verpresst sind. Diese umgangssprachlich auch als Farb-Masterbatch bezeichneten Granulate verbessern die Dosierbarkeit der Farbpigmente und erhöhen die technische Prozesssicherheit im Verarbeitungsprozess. Ein polymergebundenes Farbpigment wird optional und je nach gewünschter Farbgebung in einem Anteil von 1,0 Gew.-% bis 4,0 Gew.-% dem Gemisch in Schritt a) zugefügt.

In einer bevorzugten Ausführungsform des erfindungsgemäßen Verfahrens, wird in Schritt a) Styrol-Acrylnitril als Grundmaterial verwendet, während der elastomere Zusatz ein thermoplastisches Elastomer aus der Gruppe der thermoplastischen Polyurethane (TPU) und/oder der Gruppe der thermoplastischen Styrolblockcopolymere (TPS) ist und in einem Anteil von 0,3 Gew.-% bis 5 Gew.-% zugesetzt ist. Besonders bevorzugt ist das Gemisch aus thermoplastischem Polymer als Grundmaterial mit einem Anteil von 30 Gew.-% bis 70 Gew.-%, elastomerem Zusatz mit einem Anteil von 0,3 Gew.-% bis 5 Gew.-% und Glasfasern als Verstärkungsmittel mit einem Anteil von 30 Gew.-% bis 40 Gew.-% zusammengesetzt. Das Schäumungsmittel wird in einem Anteil von 0,5 Gew.-% bis 2 Gew.-% zugesetzt. Dieses Gemisch zeigt bei Aufschmelzen im Extruder eine gute Kompatibilität der Komponenten zueinander und eine gute Prozessstabilität.

In einer weiteren Ausführungsform des erfindungsgemäßen Verfahrens wird in Schritt a) Styrol-Acrylnitril als Grundmaterial verwendet, wobei der elastomere Zusatz Acrylnitril-Butadien-Styrol-Copolymer (ABS) und/oder Acrylnitril-Styrol-Acrylat (ASA) ist und in einem Anteil von 4,0 Gew.-% bis 20,0 Gew.-% zugesetzt ist. Bevorzugt wird ein Gemisch aus SAN als thermoplastischem Grundmaterial mit einem Anteil von 30 Gew.-% bis 70 Gew.-%, elastomerem Zusatz mit einem Anteil von 4,0 Gew.-% bis 20,0 Gew.-% und Glasfasern als Verstärkungsmittel mit einem Anteil von 30 Gew.-% bis 40 Gew.-% eingesetzt. Das Schäumungsmittel wird in einem Anteil von 0,5 Gew.-% bis 2,0 Gew.-% zugesetzt.

Eine bevorzugte Ausgestaltung der Erfindung ist ein Verfahren, wobei das Gemisch in einem Extruder bei einer Temperatur von 200°C bis 240°C, bevorzugt 215 °C bis 220 °C, geschmolzen wird. Bei diesen Schmelztemperaturen werden sehr gute Ergebnisse hinsichtlich der Porenstruktur des aufgeschäumten Abstandhalters erhalten.

Bevorzugt wir die Schmelze unter Verwendung eines sich unter Temperatureinwirkung endotherm zersetzenden Schäumungsmittels unter Freisetzung von CO₂ aufgeschäumt.

Zum Formen des Grundkörpers wird die Schmelze bevorzugt mittels einer Schmelzpumpe durch ein Formwerkzeug zu einem Hohlprofil geformt. Die Stabilisierung des Grundkörpers erfolgt anhand des noch nicht erstarrten Grundkörperprofils mittels eines Vakuumkalibrierwerkzeugs. Dadurch wird die Geometrie des Grundkörpers gesichert. Der Grundkörper wird anschließend bevorzugt durch ein Kühlbad geleitet und ungefähr auf Raumtemperatur abgekühlt.

In einer bevorzugten Ausführungsform des erfindungsgemäßen Verfahrens wird eine gas- und dampfdichte Barrierefolie auf der Außenseite des Grundkörpers angebracht. Bevorzugt wird diese mit dem Grundkörper coextrudiert oder verklebt, besonders bevorzugt verklebt.

Der mittels des erfindungsgemäßen Verfahrens hergestellte Abstandhalter kann dabei in einem Verfahren zur Herstellung einer Isolierverglasung eingesetzt werden. Ein solches Verfahren umfasst mindestens die Schritte:
g) Bereitstellung erfindungsgemäßer Abstandhalter,
h) Zusammenfügen eines Abstandhalterrahmens aus erfindungsgemäßen Abstandhaltern,
i) Anbringen einer ersten Scheibe an der ersten Scheibenkontaktfläche des Abstandhalterrahmens über ein Dichtmittel, Anbringen einer zweiten Scheibe an der zweiten Scheibenkontaktfläche des Abstandhalterrahmens über ein Dichtmittel,
j) optional: Anbringen mindestens eines weiteren Abstandhalterrahmens an der ersten Scheibe und/oder der zweiten Scheibe und Anbringen einer dritten und gegebenenfalls weiterer Scheiben an den weiteren Abstandhalterrahmen,
k) Verpressen der Scheibenanordnung,
l) Einbringen einer äußeren Abdichtung in den äußeren Scheibenzwischenraum.

Die Verklebung der Scheiben an den Scheibenkontaktflächen gemäß Schritt i) kann in einer beliebigen Reihenfolge durchgeführt werden. Optional kann die Verklebung beider Scheiben an den Scheibenkontaktflächen auch gleichzeitig erfolgen.

In Schritt I) wird der äußere Scheibenzwischenraum zumindest teilweise, bevorzugt vollständig, mit einer äußeren Abdichtung verfüllt. Die äußere Abdichtung wird bevorzugt direkt in den äußeren Scheibenzwischenraum hinein extrudiert, beispielsweise in Form einer plastischen Abdichtmasse.

Bevorzugt wird der Verglasungsinnenraum zwischen den Scheiben vor dem Verpressen der Anordnung (Schritt k)) mit einem Schutzgas gefüllt.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
Figur 1 eine schematische Darstellung des erfindungsgemäßen Abstandhalters im Querschnitt,
Figur 2 ein Kraft-Weg-Diagramm aus Pressversuchen geschäumter Abstandhalter mit verschiedenen elastomeren Zusätzen im Vergleich mit einem ungeschäumten Abstandhalter,
Figur 3a eine schematische Darstellung einer Isolierverglasung mit erfindungsgemäßem Abstandhalter im Querschnitt,
Figur 3b die Isolierverglasung gemäß Figur 3a in Draufsicht,
Figur 4 ein Flussdiagramm einer möglichen Ausführungsform des erfindungsgemäßen Verfahrens.

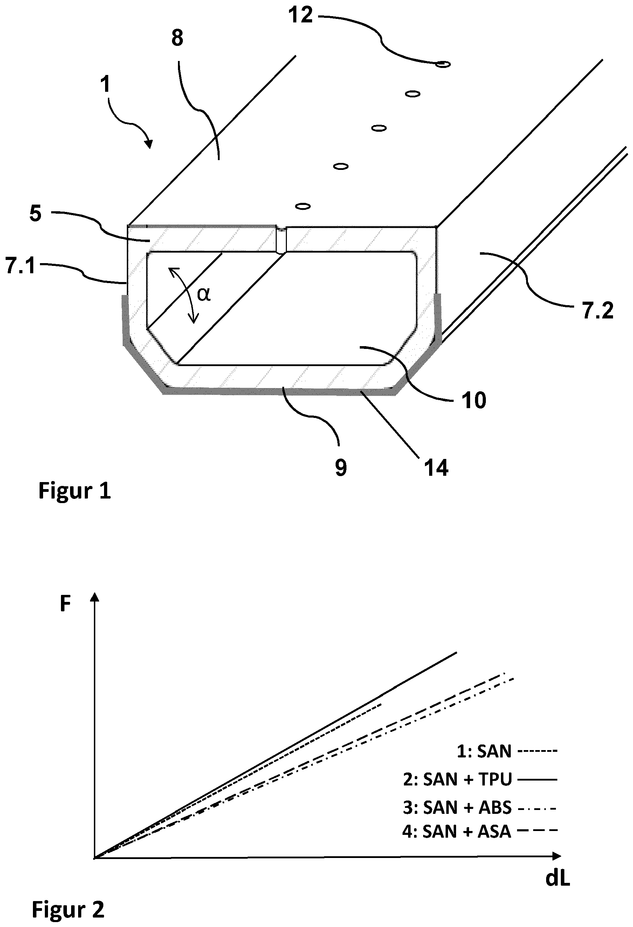

Figur 1 zeigt eine schematische Darstellung des erfindungsgemäßen Abstandhalters 1 umfassend einen polymeren Grundkörper 5 mit zwei Scheibenkontaktflächen 7.1 und 7.2, einer Verglasungsinnenraumfläche 8, einer Außenfläche 9 und einer Hohlkammer 10. Die Außenfläche 9 besitzt eine abgewinkelte Form, wobei die den Scheibenkontaktflächen 7.1 und 7.2 benachbarten Abschnitte der Außenfläche in einem Winkel von α=45° zu den Scheibenkontaktflächen 7.1 und 7.2 geneigt sind. Dies verbessert die Stabilität des Grundkörpers 5. Auf der Außenfläche 9 des Abstandhalters 1 ist eine wasser- und dampfdichte Barrierefolie 14 aufgebracht, die den Wärmeübergang durch den polymeren Grundkörper 5 in den Verglasungsinnenraum einer Isolierverglasung vermindert. Die Barrierefolie 14 drei polymere Schichten aus Polyethylenterephthalat mit einer Dicke von 12 µm und drei metallische Schichten aus Aluminium mit einer Dicke von 50 nm. Die metallischen Schichten und die polymeren Schichten sind dabei jeweils alternierend angebracht, wobei die im Einbauzustand des Abstandhalters dem äußeren Scheibenzwischenraum der Isolierverglasung zugewandte Schicht der Barrierefolie 14 eine metallische Schicht ist. Die Barrierefolie 14 ist mit dem Grundkörper 5 verklebt. Die Hohlkammer 10 ist geeignet um mit einem Trockenmittel gefüllt zu werden. Die Verglasungsinnenraumfläche 8 des Abstandhalters I weist Öffnungen 12 auf, die in regelmäßigen Abständen umlaufend entlang der Verglasungsinnenraumfläche 8 angebracht sind um einen Gasaustausch zwischen dem Innenraum der Isolierverglasung und der Hohlkammer 10 zu ermöglichen. Somit wird eventuell vorhandene Luftfeuchtigkeit im Innenraum vom Trockenmittel 11 aufgenommen. Die Öffnungen 12 sind bevorzugt als Schlitze mit einer Breite von 0,2 mm und einer Länge von 2 mm ausgeführt. Die Materialstärke (Dicke) der Wandungen des Grundkörpers 5 ist umlaufend etwa gleich und beträgt beispielsweise 1 mm. Der Grundkörper weist beispielsweise eine Höhe von 6,5 mm und eine Breite von 15 mm auf.

Das Gemisch, aus dem der Grundkörper 5 der Figur 1 extrudiert wurde, umfasst Styrol-Acrylnitril als thermoplastisches Grundmaterial mit einem Anteil von 30 Gew.-% bis 35 Gew.-% Glasfasern, als elastomeren Zusatz ein thermoplastisches Polyurethan (TPU) in einem Anteil von 2,0 Gew.-% und 1,0 Gew.-% eines Schäumungsmittels. Der Grundkörper 5 weist Poren in einer Größe von 30 µm bis 70 µm auf. Der Grundkörper 5 wies eine gute mechanische Festigkeit, verminderte Wärmeleitfähigkeit und reduziertes Gewicht auf. TPU als thermoplastisches Polyurethan bewirkt eine wesentliche Verbesserung der elastischen Eigenschaften des Grundkörpers 5, so dass die Bruchgefahr des Grundkörpers 5 bei mechanischer Belastung vermindert wird.

Figur 2 zeigt ein skizziertes Kraft-Weg-Diagramm, das anhand von Pressversuchen mit geschäumten Abstandhaltern mit verschiedenen elastomeren Zusätzen im Vergleich zu Versuchen mit ungeschäumtem Abstandhalter erstellt wurde. Die Erfinder haben Versuche mit verschiedenen Gemischen durchgeführt und einen Abstandhalter gemäß Figur 1 daraus gefertigt. Die erhaltenen Geraden zeigen dabei eine Abhängigkeit von der Auswahl des elastomeren Zusatz sowie von der Dosierung des elastomeren Zusatzes. Die Darstellung in Figur 2 basiert dabei auf von den Erfindern durchgeführten Versuchen, wobei eine Verallgemeinerung stattgefunden hat, um eine qualitative Aussage unabhängig von der exakten Dosierung des elastomeren Zusatzes zu treffen. Figur 2 zeigt die folgenden Datenreihen:

### 1: SAN

Datenreihe 1 mit der Bezeichnung SAN zeigt das Verhalten eines Grundkörpers aus Styrol-Acrylnitril als Grundmaterial mit 35 Gew.-% Glasfasern. Der Grundkörper ist nicht geschäumt. Datenreihe 1 dient als Vergleichsbeispiel.

Ein Verhalten gemäß Datenreihe 1 zeigt ein aus einem Gemisch aus 98,5 Gew.-% Styrol-Acrylnitril (SAN) mit einem Anteil von 35 Gew.-% Glasfaser gefertigter Grundkörper, dem 1,5 Gew.-% eines Farb-Masterbatches beigemischt sind.

### 2: SAN+TPU

Datenreihe 2 mit der Bezeichnung SAN+TPU (Beispiel 2) verdeutlicht den Verlauf der Kraft-Weg-Kurve bei Verwendung eines geschäumten Grundkörpers mit SAN als Grundmaterial, 35 Gew.-% Glasfasern und thermoplastischem Polyurethan (TPU) als elastomerem Zusatz. Beispielsweise sei ein Gemisch aus 95,5 Gew.-% Styrol-Acrylnitril (SAN) mit 35 Gew.-% Glasfaser genannt, dem 2,0 % TPU, 1,0 % Schäumungsmittel und 1,5 Gew.-% eines Farb-Masterbatches zugefügt sind.

### 3: SAN+ABS

Datenreihe 3 mit der Bezeichnung SAN+ABS (Beispiel 3) skizziert das Verhalten von geschäumten Grundkörpern basierend auf Styrol-Acrylnitril, 35 Gew.-% Glasfasern und Acrylnitril-Butadien-Styrol-Copolymer (ABS) als elastomerem Zusatz.

Beispielhaft für Datenreihe 3 sei ein Gemisch aus 92,5 Gew.-% Styrol-Acrylnitril (SAN) mit 35 Gew.-% Glasfaser genannt, dem 8,0 Gew.-% ABS, 1,0 Gew.-% Schäumungsmittel und 1,5 Gew.-% eines Farb-Masterbatches zugefügt sind.

### 4. SAN + ASA

Datenreihe 4 mit der Bezeichnung SAN + ASA (Beispiel 4) skizziert das Verhalten von geschäumten Grundkörpern basierend auf Styrol-Acrylnitril, 35 Gew.-% Glasfasern und Acrylnitril-Styrol-Acrylat (ASA) als elastomerem Zusatz.

Beispielhaft für Datenreihe 4 sei ein Gemisch 89,5 Gew.-% Styrol-Acrylnitril (SAN) mit 35-Gew.% Glasfasern und 8,0 Gew.-% ASA genannt, dem 1,0 Gew.-% Schäumungsmittel und 1,5 Gew.-% eines Farb-Masterbatches zugefügt sind.

Die Gemische gemäß Vergleichsbeispiel und den erfindungsgemäßen Ausführungsformen der Beispiele 2, 3 und 4 wurden jeweils als Granulat einem Extruder zugeführt und im Extruder bei einer Temperatur von 215°C bis 220°C aufgeschmolzen. Die Schmelze wurde mit einer Schmelzpumpe durch ein Formwerkzeug zu einem Abstandhalter gemäß Figur 1 geformt. Das noch weiche Hohlprofil wird in einem Vakuumkalibrierwerkzeug stabilisiert und anschließend durch ein Kühlbad geleitet.

Anhand der Proben aus Vergleichsbeispiel, Beispiel 2, Beispiel 3 und Beispiel 4 wurden Kraft/Dehnungsmessungen durchgeführt, indem die Proben zwischen zwei Prüfbacken eingespannt und die Prüfbacken aufeinander zubewegt wurden bis die Probe bricht. Die maximal auf eine Probe anwendbare Kraft F bis die Probe bricht ist im Kraft-Weg-Diagramm der Figur 2 als Abriss der Gerade erkennbar. Der Weg, den die zwei Prüfbacken bei maximaler Kraft gehen müssen bis der Grundkörper bricht, ist auf der mit der Länge dL bezeichneten x-Achse ablesbar.

Im Kraft-Weg-Diagramm der Figur 2 ist ersichtlich, dass unter Verwendung von TPU als elastomerem Zusatz (Beispiel 2) im Vergleich zum Vergleichsbeispiel eine höhere maximale Kraft F auf den Abstandhalter anwendbar ist bevor es zu einem Bruch kommt. Im Vergleich dazu ist die erreichbare maximale Kraft unter Verwendung von ABS oder ASA als elastomerem Zusatz (Beispiele 3 und 4) im Vergleich zum Vergleichsbeispiel leicht vermindert, die Prüfbacken können jedoch einen längeren Weg zurücklegen.

Aus den Versuchen der Erfinder ergibt sich, dass die Verwendung eines elastomeren Zusatzes die Flexibilität des Abstandhalters erhöht.

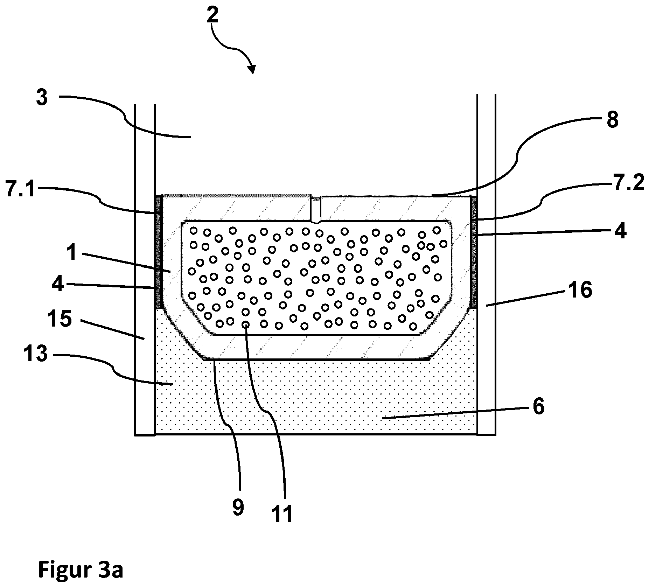

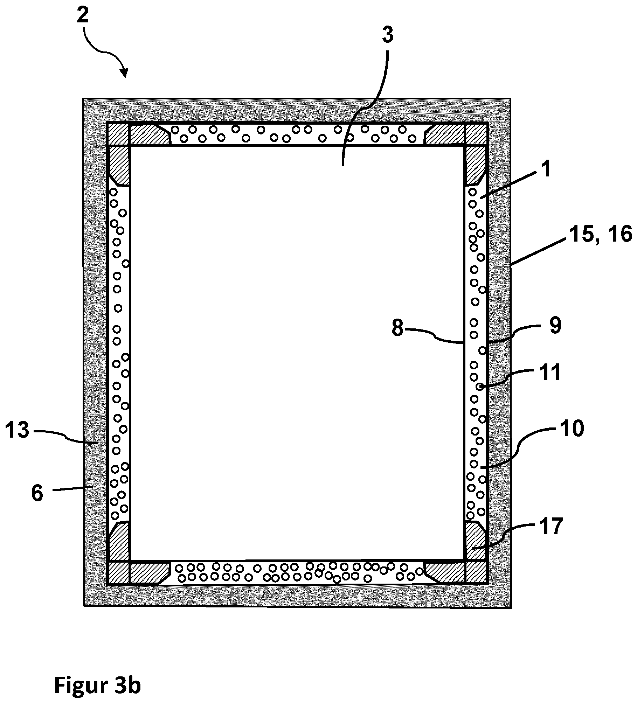

Figur 3a und 3b zeigen eine Isolierverglasung 2 mit dem erfindungsgemäßen Abstandhalter 1 gemäß Figur 1, wobei die gas- und dampfdichte Barrierefolie 14 nicht im Detail gezeigt ist. In Figur 3a ist ein Querschnitt der Isolierverglasung 2 gezeigt, während Figur 3b eine Draufsicht darstellt. Figur 3b zeigt eine Gesamtansicht der Isolierverglasung 2 gemäß Figur 3a. Die Abstandhalter 1 sind an den Ecken der Isolierverglasung 2 über Eckverbinder 17 miteinander verbunden. Zwischen einer ersten Scheibe 15 und einer zweiten Scheibe 16 ist über ein Dichtmittel 4 umlaufend der erfindungsgemäße Abstandhalter 1 angebracht. Das Dichtmittel 4 verbindet dabei die Scheibenkontaktflächen 7.1 und 7.2 des Abstandhalters 1 mit den Scheiben 15 und 16. Die Hohlkammer 10 ist mit einem Trockenmittel 11 gefüllt. Als Trockenmittel 11 wird Molekularsieb eingesetzt. Der an die Verglasungsinnenraumfläche 8 des Abstandhalters 1 angrenzende Verglasungsinnenraum 3 wird als der von den Scheiben 15, 16 und dem Abstandhalter 1 begrenzte Raum definiert. Der an die Außenfläche 9 des Abstandhalters 1 angrenzende äußere Scheibenzwischenraum 13 ist ein streifenförmiger umlaufender Abschnitt der Verglasung, der von je einer Seite von den beiden Scheiben 15, 16 und auf einer weiteren Seite von dem Abstandhalter 1 begrenzt wird und dessen vierte Kante offen ist. Der Verglasungsinnenraum 3 ist mit Argon gefüllt. Zwischen jeweils einer Scheibenkontaktfläche 7.1 bzw. 7.2 und der benachbarten Scheibe 15 bzw. 16 ist ein Dichtmittel 4 eingebracht, das den Spalt zwischen Scheibe 15, 16 und Abstandhalter 1 abdichtet. Das Dichtmittel 4 ist Polyisobutylen. Auf der Außenfläche 9 ist eine äußere Abdichtung 6 im äußeren Scheibenzwischenraum 13 angebracht, die der Verklebung der ersten Scheibe 19 und der zweiten Scheibe 20 dient. Die äußere Abdichtung 6 besteht aus Polysulfid. Die äußere Abdichtung 6 schließt bündig mit den Scheibenkanten der ersten Scheibe 15 und der zweiten Scheibe 16 ab.

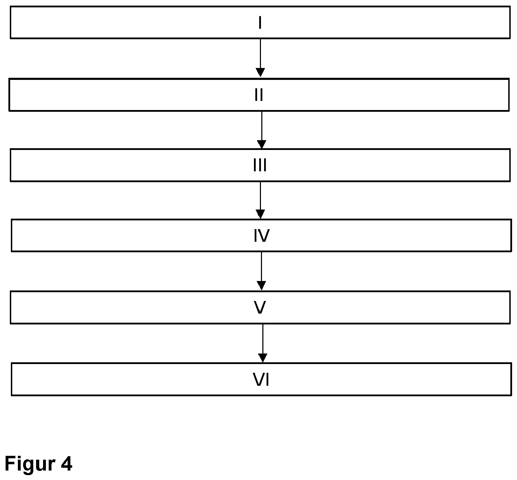

Figur 4 zeigt ein Fließdiagramm einer möglichen Ausführungsform des erfindungsgemäßen Verfahrens zur Herstellung eines Abstandhalters umfassend die Schritte:
I Bereitstellen eines Gemisches aus zumindest thermoplastischem Polymer als Grundmaterial, elastomerem Zusatz, Verstärkungsmittel und Schäumungsmittel,
II Aufschmelzen das Gemisch in einem Extruder bei einer Temperatur von 200 °C bis 240 °C geschmolzen wird,
III Zersetzen des Schäumungsmittels unter Temperatureinwirkung,
IV Formen der Schmelze durch ein Formwerkzeug unter Ausbildung eines Abstandhaltergrundkörpers,
V Stabilisieren des Abstandhalters und
VI Abkühlen des Abstandhalters.

Bevorzugt wird in Schritt IV eine gas- und dampfdichte Barrierefolie durch Verkleben auf der Außenfläche und zumindest Teilbereichen der Scheibenkontaktflächen angebracht.

### Bezugszeichenliste

- 1: Abstandhalter
- 2: Isolierverglasung
- 3: Verglasungsinnenraum
- 4: Dichtmittel
- 5: polymerer Grundkörper
- 6: äußere Abdichtung
- 7: Scheibenkontaktflächen
- 7.1: erste Scheibenkontaktfläche
- 7.2: zweite Scheibenkontaktfläche
- 8: Verglasungsinnenraumfläche
- 9: Außenfläche
- 10: Hohlkammer
- 11: Trockenmittel
- 12: Öffnungen
- 13: äußerer Scheibenzwischenraum
- 14: gas- und dampfdichte Barrierefolie
- 15: erste Scheibe
- 16: zweite Scheibe
- 17: Eckverbinder

## Patentansprüche

1. Abstandhalter (1) für Isolierverglasungen mindestens umfassend einen polymeren Grundkörper (5) mindestens umfassend zwei Scheibenkontaktflächen (7.1, 7.2), eine Verglasungsinnenraumfläche (8), eine Außenfläche (9) und eine Hohlkammer (10), wobei
- der polymere Grundkörper (5) ein thermoplastisches Polymer als Grundmaterial mit einem Anteil von 30,0 Gew.-% bis 70,0 Gew.-%, als elastomeren Zusatz ein thermoplastisches Elastomer und/oder ein thermoplastisches Terpolymer mit elastomerer Komponente mit einem Anteil von insgesamt 0,5 Gew.-% bis 20,0 Gew.-% und ein Verstärkungsmittel mit einem Anteil von 20,0 Gew.-% bis 45,0 Gew.-% enthält,
- das thermoplastische Polymer als Grundmaterial ein styrolbasiertes Polymer umfasst und
- der polymere Grundkörper (5) eine geschäumte Porenstruktur aufweist.

2. Abstandhalter (1) nach Anspruch 1, wobei der elastomere Zusatz ein thermoplastisches Elastomer aus der Gruppe der thermoplastischen Polyurethane (TPU) und/oder der Gruppe der thermoplastischen Styrolblockcopolymere (TPS) ist und in einem Anteil von 0,3 Gew.-% bis 5,0 Gew.-%, bevorzugt 0,5 Gew.-% bis 4,0 Gew.-%, besonders bevorzugt 1,5 Gew.-% bis 2,5 Gew.-% zugesetzt ist.

3. Abstandhalter (1) nach Anspruch 1, wobei der elastomere Zusatz ein thermoplastisches Terpolymer mit elastomerer Komponente umfassend ein Acrylnitril-Butadien-Styrol-Copolymer (ABS) ist, das bevorzugt in einem Anteil von 4,0 Gew.-% bis 20,0 Gew.-%, besonders bevorzugt 4,5 Gew.-% bis 13,0 Gew.-%, insbesondere 6,0 Gew.-% bis 12,0 Gew.-% zugesetzt ist.

4. Abstandhalter (1) nach Anspruch 1, wobei der elastomere Zusatz ein thermoplastisches Terpolymer mit elastomerer Komponente umfassend ein Acrylnitril-Styrol-Acrylat (ASA) ist, das bevorzugt in einem Anteil von 4,0 Gew.-% bis 20,0 Gew.-%, besonders bevorzugt 4,5 Gew.-% bis 13,0 Gew.-%, insbesondere 6,0 Gew.-% bis 12,0 Gew.-% zugesetzt ist.

5. Abstandhalter (1) nach einem der Ansprüche 1 bis 4, wobei das thermoplastische Polymer des Grundmaterials Styrol-Acrylnitril (SAN) umfasst.

6. Abstandhalter (1) nach einem der Ansprüche 1 bis 5, wobei der elastomere Zusatz zumindest kein Polypropylen, bevorzugt keine thermoplastischen Elastomere auf Olefinbasis (TPO) enthält.

7. Abstandhalter (1) nach einem der Ansprüche 1 bis 6, wobei der polymere Grundkörper (5) mittels eines Schäumungsmittels aufgeschäumt ist und das Schäumungsmittel bevorzugt in einer Menge von 0,5 Gew.-% bis 3,0 Gew.-%, besonders bevorzugt 0,5 Gew.-% bis 2,0 Gew.-%, insbesondere 0,8 Gew.-% bis 1,2 Gew.-% zugesetzt ist.

8. Abstandhalter (1) nach Anspruch 7, wobei das Schäumungsmittel ein Treibmittel und ein Trägermaterial umfasst und das Trägermaterial kein Polypropylen, bevorzugt keine thermoplastischen Elastomere auf Olefinbasis (TPO) enthält.

9. Abstandhalter (1) nach einem der Ansprüche 1 bis 8, wobei der polymere Grundkörper (5) Poren mit einer Porengröße von 10 µm bis 100 µm, bevorzugt von 20 µm bis 80 µm, besonders bevorzugt von 30 µm bis 70 µm umfasst.

10. Abstandhalter (1) nach einem der Ansprüche 1 bis 9, wobei das Verstärkungsmittel Verstärkungsfasern sind, bevorzugt Glasfasern, besonders bevorzugt Glasfasern mit einem Anteil von 25 Gew.-% bis 40 Gew.-%, insbesondere Glasfasern mit einem Anteil von 30 Gew.-% bis 35 Gew.-%.

11. Isolierverglasung (2) mindestens umfassend einen Abstandhalter (1) nach einem der Ansprüche 1 bis 10, eine erste Scheibe (15) und eine zweite Scheibe (16), wobei die erste Scheibe (15) über ein Dichtmittel (4) an der ersten Scheibenkontaktfläche (7.1) des Abstandhalters (1) angebracht ist und die zweite Scheibe (16) über ein Dichtmittel (4) an der zweiten Scheibenkontaktfläche (7.2) des Abstandhalters (1) angebracht ist.

12. Verfahren zur Herstellung eines Abstandhalters (1) nach einem der Ansprüche 1 bis 10, wobei zumindest
a) ein Gemisch aus zumindest thermoplastischem Polymer als Grundmaterial, elastomerem Zusatz, Verstärkungsmittel und Schäumungsmittel bereitgestellt wird,
b) das Gemisch in einem Extruder bei einer Temperatur von 200 °C bis 240 °C geschmolzen wird,
c) das Schäumungsmittel unter Temperatureinwirkung zersetzt wird,
d) die Schmelze durch ein Formwerkzeug gedrückt und ein Abstandhalter (1) erhalten wird,
e) der Abstandhalter (1) stabilisiert wird und
f) der Abstandhalter (1) abgekühlt wird,
wobei das thermoplastische Polymer als Grundmaterial in Schritt a) ein styrolbasiertes Polymer umfasst.

13. Verfahren nach Anspruch 12, wobei das thermoplastische Polymer des Grundmaterials Styrol-Acrylnitril ist und der elastomere Zusatz ein thermoplastisches Elastomer aus der Gruppe der thermoplastischen Polyurethane (TPU) und/oder der Gruppe der thermoplastischen Styrolblockcopolymere (TPS) ist und in einem Anteil von 0,3 Gew.-% bis 5,0 Gew.-% zugesetzt ist.

14. Verfahren nach Anspruch 12, wobei das thermoplastische Polymer des Grundmaterials Styrol-Acrylnitril ist und der elastomere Zusatz Acrylnitril-Butadien-Styrol-Copolymer (ABS) ist und in einem Anteil von 4,0 Gew.-% bis 20,0 Gew.-% zugesetzt ist.

15. Verfahren nach Anspruch 12, wobei das thermoplastische Polymer des Grundmaterials Styrol-Acrylnitril ist und der elastomere Zusatz Acrylnitril-Styrol-Acrylat (ASA) ist und in einem Anteil von 4,0 Gew.-% bis 20,0 Gew.-% zugesetzt ist.

## Claims

1. Spacer (1) for insulating glazing, at least comprising a polymeric main body (5) at least comprising two pane contact surfaces (7.1, 7.2), a glazing interior surface (8), an outer surface (9), and a cavity (10), wherein
- the polymeric main body (5) contains a thermoplastic polymer in a proportion of 30.0 wt.% to 70.0 wt.% as a base material, a thermoplastic elastomer and/or a thermoplastic terpolymer having an elastomeric component in a total proportion of 0.5 wt.% to 20.0 wt.% as an elastomeric additive, and a reinforcing agent in a proportion of 20.0 wt.% to 45.0 wt.%,
- the thermoplastic polymer comprises a styrene-based polymer as the base material, and
- the polymeric main body (5) has a foamed pore structure.

2. Spacer (1) according to claim 1, wherein the elastomeric additive is a thermoplastic elastomer from the group of thermoplastic polyurethanes (TPU) and/or the group of the thermoplastic styrene block copolymers (TPS), and is added in a proportion of from 0.3 wt.% to 5.0 wt.%, preferably from 0.5 wt.% to 4.0 wt.%, particularly preferably 1.5 wt.% to 2.5 wt.%.

3. Spacer (1) according to claim 1, wherein the elastomeric additive is a thermoplastic terpolymer having an elastomeric component comprising an acrylonitrile butadiene styrene copolymer (ABS), which is preferably added in a proportion of from 4.0 wt.% to 20.0 wt.%, particularly preferably from 4.5 wt.% to 13.0 wt.%, in particular from 6.0 wt.% to 12.0 wt.%.

4. Spacer (1) according to claim 1, wherein the elastomeric additive is a thermoplastic terpolymer having an elastomeric component comprising an acrylonitrile styrene acrylate (ASA), which is preferably added in a proportion of from 4.0 wt.% to 20.0 wt.%, particularly preferably from 4.5 wt.% to 13.0 wt.%, in particular from 6.0 wt.% to 12.0 wt.%.

5. Spacer (1) according to any of claims 1 to 4, wherein the thermoplastic polymer of the base material comprises styrene acrylonitrile (SAN).

6. Spacer (1) according to any of claims 1 to 5, wherein the elastomeric additive contains at least no polypropylene, preferably no olefin-based thermoplastic elastomers (TPO).

7. Spacer (1) according to any of claims 1 to 6, wherein the polymeric main body (5) is foamed by means of a foaming agent and the foaming agent is preferably added in an amount of from 0.5 wt.% to 3.0 wt.%, particularly preferably from 0.5 wt.% to 2.0 wt.%, in particular from 0.8 wt.% to 1.2 wt.%.

8. Spacer (1) according to claim 7, wherein the foaming agent comprises a blowing agent and a support material, and the support material contains no polypropylene, preferably no olefin-based thermoplastic elastomers (TPO).

9. Spacer (1) according to any of claims 1 to 8, wherein the polymeric main body (5) comprises pores having a pore size of from 10 µm to 100 µm, preferably of from 20 µm to 80 µm, particularly preferably of from 30 µm to 70 µm.

10. Spacer (1) according to any of claims 1 to 9, wherein reinforcing fibers are the reinforcing agent, preferably glass fibers, particularly preferably glass fibers in a proportion of from 25 wt.% to 40 wt.%, in particular glass fibers in a proportion of from 30 wt.% to 35 wt.%.

11. Insulating glazing (2) at least comprising a spacer (1) according to any of claims 1 to 10, a first pane (15) and a second pane (16), the first pane (15) being attached to the first pane contact surface (7.1) of the spacer (1) by means of a sealant (4), and the second pane (16) being attached to the second pane contact surface (7.2) of the spacer (1) by means of a sealant (4).

12. Method for producing a spacer (1) according to any of claims 1 to 10, wherein at least
a) a mixture of at least a thermoplastic polymer as a base material, an elastomeric additive, a reinforcing agent and a foaming agent is provided,
b) the mixture is melted in an extruder at a temperature of from 200°C to 240°C,
c) the foaming agent is decomposed under thermal action,
d) the molten material is pressed by a molding tool and a spacer (1) is obtained,
e) the spacer (1) is stabilized and
f) the spacer (1) is cooled,
wherein the thermoplastic polymer comprises a styrene-based polymer as the base material in step a).

13. Method according to claim 12, wherein the thermoplastic polymer of the base material is styrene acrylonitrile, and the elastomeric additive is a thermoplastic elastomer from the group of the thermoplastic polyurethanes (TPU) and/or the group of the thermoplastic styrene block copolymers (TPS) and is added in a proportion of from 0.3 wt.% to 5.0 wt.%.

14. Method according to claim 12, wherein the thermoplastic polymer of the base material is styrene acrylonitrile and the elastomeric additive is acrylonitrile butadiene styrene copolymer (ABS) and is added in a proportion of from 4.0 wt.% to 20.0 wt.%.

15. Method according to claim 12, wherein the thermoplastic polymer of the base material is styrene acrylonitrile and the elastomeric additive is acrylonitrile styrene acrylate (ASA) and is added in a proportion of from 4.0 wt.% to 20.0 wt.%.

## Revendications

1. Espaceur (1) pour vitrages isolants comprenant au moins un corps de base polymère (5) comprenant au moins deux surfaces de contact de vitre (7.1, 7.2), une surface d'espace intérieur de vitrage (8), une surface extérieure (9) et une chambre creuse (10), dans lequel
- le corps de base polymère (5) contient un polymère thermoplastique en tant que matériau de base dans une proportion allant de 30,0 % en poids à 70,0 % en poids, en tant qu'additif élastomère, un élastomère thermoplastique et/ou un terpolymère thermoplastique comportant un constituant élastomère dans une proportion allant au total de 0,5 % en poids à 20,0 % en poids, et un agent de renforcement dans une proportion allant de 20,0 % en poids à 45,0 % en poids,
- le polymère thermoplastique comprend un polymère à base de styrène en tant que matériau de base et
- le corps de base polymère (5) présente une structure de pores expansée.

2. Espaceur (1) selon la revendication 1, dans lequel l'additif élastomère est un élastomère thermoplastique du groupe des polyuréthanes thermoplastiques (TPU) et/ou du groupe des copolymères à blocs styrène thermoplastiques (TPS) et est ajouté dans une proportion allant de 0,3 % en poids à 5,0 % en poids, de préférence de 0,5 % en poids à 4,0 % en poids, de manière particulièrement préférée de 1,5 % en poids à 2,5 % en poids.

3. Espaceur (1) selon la revendication 1, dans lequel l'additif élastomère est un terpolymère thermoplastique comportant un constituant élastomère comprenant un copolymère acrylonitrile-butadiène-styrène (ABS), lequel terpolymère thermoplastique est ajouté de préférence dans une proportion allant de 4,0 % en poids à 20,0 % en poids, de manière particulièrement préférée de 4,5 % en poids à 13,0 % en poids, en particulier de 6,0 % en poids à 12,0 % en poids.

4. Espaceur (1) selon la revendication 1, dans lequel l'additif élastomère est un terpolymère thermoplastique comportant un constituant élastomère comprenant un acrylonitrile-styrène-acrylate (ASA), lequel terpolymère thermoplastique est ajouté de préférence dans une proportion allant de 4,0 % en poids à 20,0 % en poids, de manière particulièrement préférée de 4,5 % en poids à 13,0 % en poids, en particulier de 6,0 % en poids à 12,0 % en poids.

5. Espaceur (1) selon l'une des revendications 1 à 4, dans lequel le polymère thermoplastique du matériau de base comprend du styrène-acrylonitrile (SAN).

6. Espaceur (1) selon l'une des revendications 1 à 5, dans lequel l'additif élastomère ne contient au moins aucun polypropylène, de préférence aucun élastomère thermoplastique à base d'oléfine (TPO).

7. Espaceur (1) selon l'une des revendications 1 à 6, dans lequel le corps de base polymère (5) est expansé au moyen d'un agent moussant et l'agent moussant est ajouté de préférence en une quantité allant de 0,5 % en poids à 3,0 % en poids, de manière particulièrement préférée de 0,5 % en poids à 2,0 % en poids, en particulier de 0,8 % en poids à 1,2 % en poids.

8. Espaceur (1) selon la revendication 7, dans lequel l'agent moussant comprend un agent propulseur et un matériau de support et le matériau de support ne contient aucun polypropylène, de préférence aucun élastomère thermoplastique à base d'oléfine (TPO).

9. Espaceur (1) selon l'une des revendications 1 à 8, dans lequel le corps de base polymère (5) comprend des pores comportant une taille de pores allant de 10 µm à 100 µm, de préférence de 20 µm à 80 µm, de manière particulièrement préférée de 30 µm à 70 µm.

10. Espaceur (1) selon l'une des revendications 1 à 9, dans lequel l'agent de renforcement est des fibres de renforcement, de préférence des fibres de verre, de manière particulièrement préférée des fibres de verre dans une proportion allant de 25 % en poids à 40 % en poids, en particulier des fibres de verre dans une proportion allant de 30 % en poids à 35 % en poids.

11. Vitrage isolant (2) comprenant au moins un espaceur (1) selon l'une des revendications 1 à 10, une première vitre (15) et une seconde vitre (16), dans lequel la première vitre (15) est montée sur la première surface de contact de vitre (7.1) de l'espaceur (1) par l'intermédiaire d'un agent d'étanchéité (4) et la seconde vitre (16) est montée sur la seconde surface de contact de vitre (7.2) de l'espaceur (1) par l'intermédiaire d'un agent d'étanchéité (4).

12. Procédé de fabrication d'un espaceur (1) selon l'une des revendications 1 à 10, dans lequel au moins
a) un mélange composé au moins de polymère thermoplastique en tant que matériau de base, d'additif élastomère, d'agent de renforcement et d'agent moussant est fourni,
b) le mélange est fondu dans une extrudeuse à une température allant de 200 °C à 240 °C,
c) l'agent moussant est décomposé sous l'effet de la température,
d) la masse fondue est pressée à travers un outil de moulage et un espaceur (1) est obtenu,
e) l'espaceur (1) est stabilisé et
f) l'espaceur (1) est refroidi,
dans lequel le polymère thermoplastique comprend, dans l'étape a), un polymère à base de styrène en tant que matériau de base.

13. Procédé selon la revendication 12, dans lequel le polymère thermoplastique du matériau de base est du styrène-acrylonitrile et l'additif élastomère est un élastomère thermoplastique du groupe des polyuréthanes thermoplastiques (TPU) et/ou du groupe des copolymères à blocs styrène thermoplastiques (TPS) et est ajouté dans une proportion allant de 0,3 % en poids à 5,0 % en poids.

14. Procédé selon la revendication 12, dans lequel le polymère thermoplastique du matériau de base est du styrène-acrylonitrile et l'additif élastomère est un copolymère acrylonitrile-butadiène-styrène (ABS) et est ajouté dans une proportion allant de 4,0 % en poids à 20,0 % en poids.

15. Procédé selon la revendication 12, dans lequel le polymère thermoplastique du matériau de base est du styrène-acrylonitrile et l'additif élastomère est de l'acrylonitrile-styrène-acrylate (ASA) et est ajouté dans une proportion allant de 4,0 % en poids à 20,0 % en poids.
